# EUROPEAN PATENT SPECIFICATION

(11) **EP 2 818 715 B1**
(45) Date of publication and mention of the grant of the patent: **02.11.2016**
(21) Application number: 14171511.0
(22) Date of filing: 06.06.2014
(51) Int. Cl.: F04B 35/04, H02K 33/16, H02K 7/14

(54) **Linear compressor**
Linearer Verdichter
Compresseur linéaire

(30) Priority: 28.06.2013 KR 20130075512
(43) Date of publication of application: 31.12.2014
(73) Proprietor: LG Electronics, Inc., Seoul 150-721 (KR)
(72) Inventor: Jeong, Sangsub, 153-802 Seoul (KR)
(74) Representative: Vossius & Partner Patentanwälte Rechtsanwälte mbB

(56) References cited:
- EP-A2- 2 312 157
- KR-A- 20100 010 421
- US-A1- 2004 061 583
- US-A1- 2006 145 797

## Description

### BACKGROUND

The present disclosure relates to a linear compressor.

In general, compressors may be mechanisms that receive power from power generation devices such as electric motors or turbines to compress air, refrigerants, or other working gases, thereby increasing a pressure of the working gas. Compressors are being widely used in home appliances or industrial machineries such as refrigerators and air-conditioners.

Compressors may be largely classified into reciprocating compressors in which a compression space for suctioning or discharging a working gas is defined between a piston and a cylinder to compress a refrigerant while the piston is linearly reciprocated within the cylinder, rotary compressors in which a compression space for suctioning or discharging a working gas is defined between a roller that is eccentrically rotated and a cylinder to compress a refrigerant while the roller is eccentrically rotated along an inner wall of the cylinder, and scroll compressors in which a compression space for suctioning or discharging is defined between an orbiting scroll and a fixed scroll to compress a refrigerant while the orbiting scroll is rotated along the fixed scroll.

In recent years, among the reciprocating compressors, linear compressors having a simple structure in which the piston is directly connected to a driving motor, which is linearly reciprocated, to improve compression efficiency without mechanical less due to switching in moving are being actively developed.

Generally, such a linear compressor is configured to suction and compress a refrigerant while a piston is linearly reciprocated within a cylinder by a linear motor in a sealed shell, thereby discharging the compressed refrigerant.

The linear motor has a structure in which a permanent magnet is disposed between an inner stator and an outer stator. Here, the permanent magnet may be linearly reciprocated by a mutual electromagnetic force between the permanent magnet and the inner (or outer) stator. Also, since the permanent magnet is operated in a state where the permanent magnet is connected to the piston, the refrigerant may be suctioned and compressed while the piston is linearly reciprocated within the cylinder and then be discharged.

The linear compressor according to the related art is disclosed in Korean Patent Publication No. 10-2010-0010421, proposed by this applicant.

The linear compressor according to the related art includes a linear motor, which is provided with an outer stator 240 having a core block 242 and a coil-wound body 241, an inner stator 220, and a permanent magnet 260. A piston 140 has one end connected to the permanent magnet 260.

Here, the permanent magnet 260 is composed of one magnet having a single polarity, and may include a rare-earth magnet.

When the permanent magnet 260 linearly reciprocates by mutual electromagnetic force between the inner stator 220 and the outer stator 240, the piston 140 linearly reciprocates in a cylinder 130 along with the permanent magnet 260.

According to the related art, the permanent magnet is provided with a single magnet, and thus interacts with a positive pole of the core block of the outer stator. An amount of magnetic flux generated from the single magnet is insufficient, and resultantly, the dimension (length or thickness) of the permanent magnet should be enlarged in order to compensate for the insufficient magnetic flux.

Furthermore, since the permanent magnet is composed of an expensive rare-earth magnet, the greater dimension of the permanent magnet leads to a sharp increase in manufacturing cost of the linear compressor.

### SUMMARY

Embodiments provide a linear compressor provided with a linear motor capable of generating a sufficient force (a thrust).

In one embodiment, a linear compressor includes: a cylinder forming a compression space for a refrigerant; a piston reciprocatably moving in an axial direction inside the cylinder; and a linear motor supplying a power to the piston, wherein the linear motor includes: an outer stator including a first stator magnetic pole, a second stator magnetic pole, and an opening defined between the first stator magnetic pole and the second stator magnetic pole; an inner stator disposed apart from the outer stator; and a permanent magnet movably disposed in an air gap between the outer stator and the inner stator, and having three poles, wherein the three poles include two both-end magnetic poles, and a central magnetic pole disposed between the two both-end magnetic poles, the central magnetic pole having a length greater than the both-end magnetic poles.

A length of the central magnetic pole may be twice or less than that of any one of the two both-end magnetic poles.

A length of the central magnetic pole may be equal to or less than the sum of lengths of the two both-end magnetic poles.

An axial direction length of the opening may be equal to or greater than a radial direction height of the air gap.

The piston may be moveable by a stroke between a top dead center (TDC) and a bottom dead center (BDC), and a length of the first stator magnetic pole or second stator magnetic pole may be equal to or less than the stroke.

A length of any one of the two both-end magnetic poles may be 90% or more of a length of the first stator magnetic pole or second stator magnetic pole.

The two both-end magnetic poles may include: a first pole coupled to the central magnetic pole at a first interface; and a second pole coupled to the central magnetic pole at a second interface.

The first interface may reciprocate in an axial direction between both ends of the first stator magnetic pole, based on the center or the first stator magnetic pole, and the second interface may reciprocate in an axial direction between both ends of the second stator magnetic pole, based on the center of the second stator magnetic pole.

The first pole may include an end at a position facing the first interface, and the end of the first pole may be positioned outside the outer stator when the piston is positioned at BDC.

The end of the first pole may be positioned at an end of or outside the first stator magnetic pole when the piston is positioned at TDC.

The two both-end magnetic poles may include a first pole coupled to one side of the central magnetic pole, and at least a portion of the first pole may be positioned in an air gap between the first stator magnetic pole and the inner stator.

The two both-end magnetic poles may include a second pole coupled to the other side of the central magnetic pole, and at least a portion of the second pole may be positioned in an air gap between the second stator magnetic pole and the inner stator.

The opening may be defined between a tip of the first stator magnetic pole and a tip of the second stator magnetic pole, at one side of an accommodation space for accommodating a coil.

The permanent magnet may be made of a ferrite material.

The piston and the cylinder may be made of aluminum or aluminum alloy.

The details of one or more embodiments are set forth in the accompanying drawings and the description below. Other features will be apparent from the description and drawings, and from the claims.

### BRIEF DESCRIPTION OF THE DRAWINGS

Fig. 1 is a cross-sectional view illustrating an inner configuration of a linear compressor according to an embodiment.
Fig. 2 is an enlarged view illustrating a portion "A" of FIG. 1.
Figs. 3 and 4 are cross-sectional views illustrating a reciprocating motion of a permanent magnet in an axial direction according to operation of a linear motor.
Figs. 5 and 6 are cross-sectional views schematically illustrating the configuration of a linear motor.
Fig. 7A illustrates a magnetic flux in a linear motor having a magnetic pole tip distance of T1, and Fig. 7B illustrates a magnetic flux in a linear motor having a magnetic pole tip distance of T2.
Fig. 7C illustrates the magnitude of a leakage magnetic flux in the linear motor in Figs. 7A and 7B.
Fig. 8 is a cross-sectional view of a linear motor illustrating a position of a permanent magnet when a piston is positioned at a top dead center (TDC), according to an embodiment.
Fig. 9 is a cross-sectional view of a linear motor illustrating a position of a permanent magnet when a piston is positioned at a bottom dead center (BDC), according to an embodiment.
Fig. 10 is a graph showing the magnitude of a thrust generated according to the lengths of magnetic poles at both ends, in a permanent magnet according to an embodiment.
Fig. 11 is a graph showing the magnitude of a cogging force according to the lengths of magnetic poles at both ends, in a permanent magnet according to an embodiment.
Fig. 12 is a graph showing the magnitude of a thrust generated according to the length of a central magnetic pole, in a permanent magnet according to an embodiment.
Fig. 13 is a graph showing variations in a cogging force according to the length of a central magnetic pole, in a permanent magnet according to an embodiment.

### DETAILED DESCRIPTION OF THE EMBODIMENTS

Hereinafter, specific embodiments will be described with reference to accompanying drawings. However, the scope of the present disclosure is not limited to the embodiments herein, and thus a person skilled in the art, who understood the scope of the present disclosure, would easily suggest other embodiments within the same scope thereof.

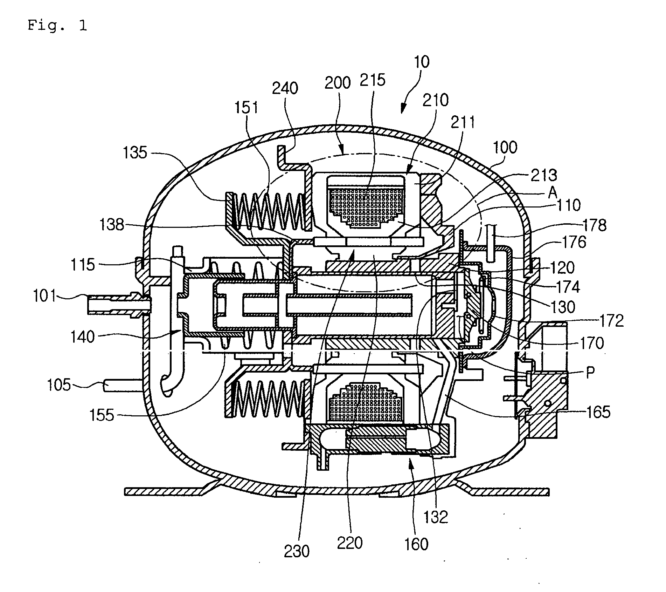

Fig. 1 is a cross-sectional view illustrating an inner configuration of a linear compressor according to an embodiment.

Referring to Fig. 1, the linear compressor 10 according to an embodiment includes a cylinder 120 disposed in a shell 110, a piston 130 linearly reciprocating inside the cylinder 120, and a motor assembly 200 which is a linear motor exerting a driving force on the piston 130 The shell 110 may be configured by combination of an upper shell and a lower shell.

The shell 110 includes an inlet through which a refrigerant flows in, and an outlet through which the refrigerant compressed inside the cylinder 120 is discharged. The refrigerant suctioned through the inlet 101 flows into the piston 130 via a suction muffler 140. While the refrigerant is passing through the suction muffler 140, noise may be reduced.

The piston 130 may be made of a nonmagnetic material such as an aluminum-based material (aluminum or aluminum alloy). Since the piston 130 is made of the aluminum-based material, the magnetic flux generated in the motor assembly 200 is delivered to the piston 130, thereby preventing the magnetic flux from being leaked to the outside of the piston 130. The piston 130 may be formed by forging.

The cylinder 120 may be made of a nonmagnetic material such as an aluminum-based material (aluminum or aluminum alloy). The cylinder 120 and the piston 130 may have the same material composition ratio, that is, type and composition ratio.

Since the cylinder 120 is made of the aluminum-based material, the magnetic flux generated in the motor assembly 200 is delivered to the cylinder 120, thereby preventing the magnetic flux from being leaked to the outside of the cylinder 120. The cylinder 120 may be formed by extruded rod processing.

The piston 130 and the cylinder 120 are made of the same material (aluminum), and thus have the same thermal expansion coefficient. During operation of the linear compressor 10, a high-temperature environment (about 100 °C) is created in the shell 100. At this time, the piston 130 and the cylinder 120 have the same thermal expansion coefficient, and may thus have the same amount of thermal deformation.

Eventually, since the piston 130 and the cylinder 120 are thermally deformed in different amounts or directions, it is possible to prevent interference with the cylinder 120 during movement of the piston 130.

A compression space P for compressing the refrigerant by the piston 130 is defined in the cylinder 120. A suction hole 131a through which the refrigerant is introduced into the compression space P is defined in the piston 130, and a suction valve 132 selectively opening the suction hole 131a is disposed at one side of the suction hole 131a.

It discharge valve assemble 170, 172 and 174 for discharging the refrigerant compressed in the compression space P is disposed at one side of the compression space P. That is, it is understood that the compression space P is formed between one end of the piston 130 and the discharge valve assembly 170, 172 and 174.

The discharge valve assembly 170, 172 and 174 includes a discharge cover 172 in which a discharge space of the refrigerant is defined; a discharge valve 170 which is opened and introduces the refrigerant into the discharge space when the pressure of the compression space P is not less than a discharge pressure; and a valve spring 174 is disposed between the discharge valve 170 and the discharge cover 172 to exert an elastic force in an axial direction.

Here, it can be understood that the "axial direction" used herein is a direction in which the piston linearly reciprocates, that is, a horizontal direction in Fig. 1. On the contrary, it can be understood that a "radial direction" is a direction perpendicular to the reciprocating direction of the piston 130, that is, a vertical direction in Fig. 1.

The suction valve 132 may be disposed at one side of the compression space P, and the discharge valve 170 may be disposed at the other side of the compression space P, that is, at an opposite side of the suction valve 132.

While the piston 130 linearly reciprocates inside the cylinder 120, the suction valve 132 is opened to allow the refrigerant to be introduced into the compression space P when the pressure of the compression space P is lower than the discharge pressure and not greater than a suction pressure. On the contrary, when the pressure of the compression space P is not less than the suction pressure, the refrigerant of the compression space P is compressed in a state where the suction valve 132 is closed.

If the pressure of the compression space P is the discharge pressure or more, the valve spring 174 is deformed to open the discharge valve 170 and the refrigerant is discharged from the compression space P into the discharge space of the discharge cover 172.

The refrigerant of the discharge space flows into a loop pipe 178 via the discharge muffler 176. The discharge muffler 176 may reduce flow noise of the compressed refrigerant, and the loop pipe 178 guides the compressed refrigerant to a discharge part 105. The loop pipe 178 is coupled to the discharge muffler 176 and curvedly extends to be coupled to the discharge part 105.

The linear compressor 10 further includes a frame 110. The frame 110, which is a member of fixing the cylinder 200, may be integrally formed with the cylinder 200 or may be coupled to the cylinder 120 by means of a separate fastening member. The discharge cover 172 and the discharge muffler 176 may be coupled to the frame 110.

The motor assembly 200 includes an outer stator 210 fixed to the frame 110 and disposed so as to surround the cylinder 120, an inner stator 220 disposed apart from the inside of the outer stator 210, and a permanent magnet 230 disposed in a space between the outer stator 210 and the inner stator 220.

The permanent magnet 230 may linearly reciprocate by a mutual electromagnetic force between the outer stator 210 and the inner stator 220. The permanent magnet 230 may be composed of a single magnet having one pole, or may be formed by combination of multiple magnets having three poles.

The permanent magnet 230 may be coupled to the piston 130 by a connection member 138. The connection member 138 may extend to the permanent magnet from one end of the piston 130. As the permanent magnet 230 linearly moves, the piston 130 may linearly reciprocate in an axial direction along with the permanent magnet 230.

The outer stator 210 includes a coil-wound body 213 and 215 and a stator core 211.

The coil-wound body 213 and 215 includes a bobbin 213 and a coil 215 wound in a circumferential direction of the bobbin 213. The coil 215 may have a polygonal section, for example, a hexagonal section.

The stator core 211 is provided such that a plurality of laminations are stacked in a circumferential direction, and may be disposed to surround the coil-wound body 213 and 215.

A state cover 240 is disposed at one side of the outer stator 210. One end of the outer stator 210 may be supported by the frame 110, and the other end thereof may be supported by the stator cover 240.

The inner stator 220 is fixed to the outer circumference of the cylinder 120. The inner stator 220 is configured such that a plurality of laminations are stacked at an outer side of the cylinder 120 in a circumferential direction.

The linear compressor 10 further includes a supporter 135 supporting the piston 130, and a back cover 115 extending toward the inlet 101 from the piston 130. The back cover 115 may be disposed to cover at least a portion of the suction muffler 140.

The linear compressor 10 includes a plurality of springs 151 and 155 which of each natural frequency is adjusted so as to allow the piston 130 to perform resonant motion.

The plurality of springs 151 and 155 include a first spring 151 supported between the supporter 135 and the stator cover 240, and a second spring 155 supported between the supporter 135 and the back cover 115.

The first spring 151 may be provided in plurality at both sides of the cylinder 120 or piston 130, and the second spring 155 may be provided in plurality at the front of the cylinder 120 or piston 130.

Here, it can be understood that the term "font" used herein means a direction oriented toward the inlet 101 from the piston 130. That is, it can be understood that 'rear' means a direction oriented toward the discharge valve assembly 170, 172 and 174 from the inlet 101. This term may also be equally used in the following description.

A predetermined amount oil may be stored on an inner bottom surface of the shell 100. An oil supply device 160 for pumping an oil may be provided in a lower portion of the shell 100. The oil supply device 160 is operated by vibration generated according to linear reciprocating motion of the piston 130 to thereby pump the oil upward.

The linear compressor 10 further includes an oil supply pipe 165 guiding the flow of the oil from the oil supply device 160. The oily supply pipe 165 may extend from the oil supply device 160 to a space between the cylinder 120 and the piston 130.

The oil pumped from the oil supply device 160 is supplied to the space between the cylinder 120 and the piston 130 via the oil supply pipe 165, and performs cooling and lubricating operations.

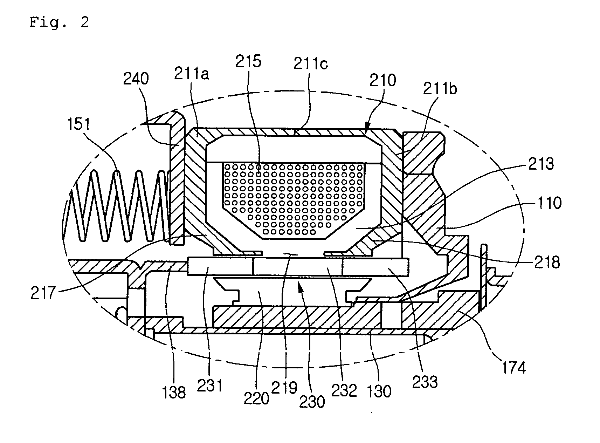

Fig. 2 is an enlarged view illustrating a portion "A" of FIG. 1, and Figs. 3 and 4 are cross-sectional views illustrating a reciprocating motion of the permanent magnet in an axial direction according to operation of the linear motor.

Referring to Figs. 2 to 4, the outer stator 210 according to an embodiment includes a stator core 211 in which a plurality of laminations are stacked in a circumferential direction. The stator core 211 is configured such that the first core 211a and the second core 211b are coupled at a coupling part 211c.

An accommodation space in which the bobbin 213 and the coil are disposed is defined in the stator core 211, and an opening 219 is provided at one side of the accommodation space. That is, the first core 211a and the second core 211b may be coupled such that the stator core 211 has the opening 219 at a central portion thereof to thereby have a C-shape.

The first core 211a includes a first stator magnetic pole 217 acting with the permanent magnet 230. The second core 211b includes a second stator magnetic pole 218 acting with the permanent magnet 230. The first stator magnetic pole 217 and the second stator magnetic pole 218 may be portions of the first and second cores 211a and 211b, respectively.

It can be understood that the opening 219 may be a space between the first stator magnetic pole 217 and the second magnetic pole 218.

The permanent magnet 230 may be composed of a ferrite material which is relatively inexpensive.

The permanent magnet 230 includes multiple poles 231, 232 and 233 of which polarities are alternately arranged. The multiple poles 231, 232 and 233 include a first pole 231, a second pole 232, and a third pole 233, which are coupled to each other.

When a current is applied to the motor assembly 200, a current flows through the coil 215, a magnetic flux is formed around the coil 215 by the current flowing through the coil 215; and the magnetic flux flows along the outer stator 210 and the inner stator 220 while forming a closed circuit.

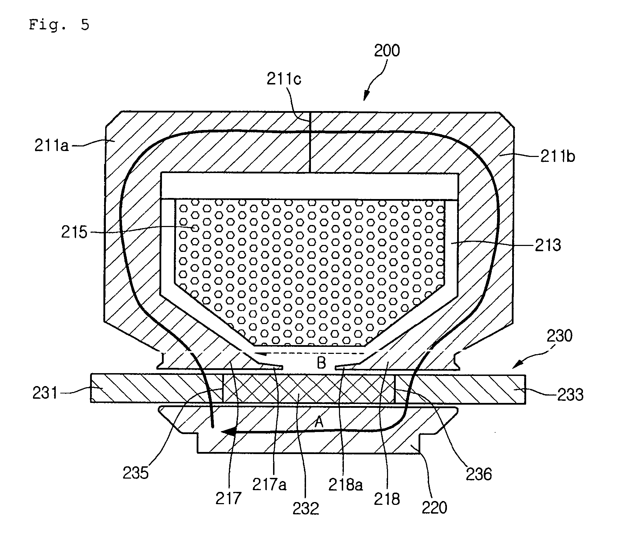

Here, the first stator magnetic pole 217 may form one of an N-pole and a S-pole, and the second stator magnetic pole 218 may form the other one of the N-pole and the s-pole (see solid line arrow A in Fig. 5).

The permanent magnets 231, 232 and 233 linearly reciprocate in an axial direction between the outer stator 210 and the inner stator 220 by means of an interaction force of the magnetic flux flowing through the outer stator 210 and the inner stator 220 and the magnetic flux formed by the permanent magnets 231, 232 and 233.

The piston 130 may move inside the cylinder 120 by motions of the permanent magnets 231, 232 and 233.

When the current flowing through the coil 215 changes its direction, the direction of the magnetic flux passing through the outer stator 210 and the inner stator 220 are changed. That is, in the above-described example, polarities of the first and second stators 217 and 218 are interchanged. Therefore, the movement directions of the permanent magnets 231, 232, and 233 are reversed, and therefore the movement direction of the piston 130 is also changed. In this way, while the direction of the magnetic flux is changed repetitively, the piston 130 may linearly reciprocate.

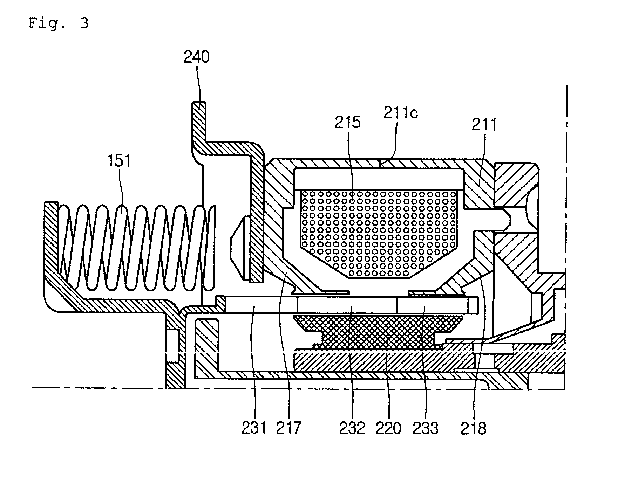

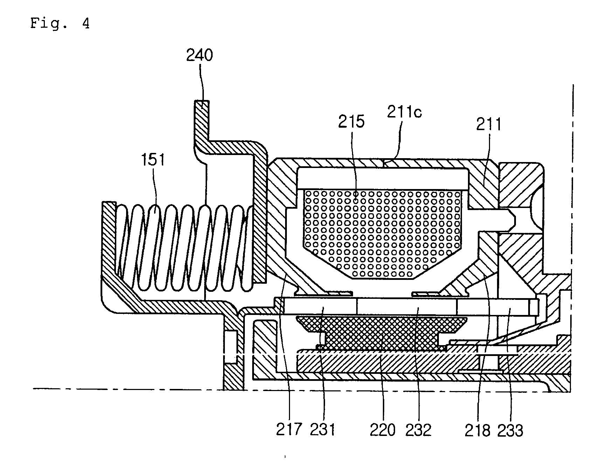

Fig. 3 illustrates a mode in which the first spring 151 is elongated when the permanent magnets 231, 232 and 233 move in one direction, and Fig. 4 illustrates a mode in which the second spring 151 is compressed when the permanent magnets 231, 232 and 233 move in the other direction.

The permanent magnets 231, 232 and 233 and the piston 130 may linearly reciprocate by repeating the modes of Figs. 3 and 4. For example, when the permanent magnets are at a position of Fig. 3, the piston 130 is positioned at a bottom dead center (BDC); and when the permanent magnets are at a position of Fig. 4, the piston 130 is positioned at a top dead center (TDC).

Here, the BDC means a position when the piston 130 is at the lowest position inside the cylinder 120, that is, a position when the piston 130 is disposed farthest away from the compression space P.

Here, the TDC means a position when the piston 130 is at the highest position inside the cylinder 120, that is, a position when the piston 130 is disposed closest to the compression space P.

Hereinafter, a structure of the motor assembly 200 will be more fully described with referenced to drawings.

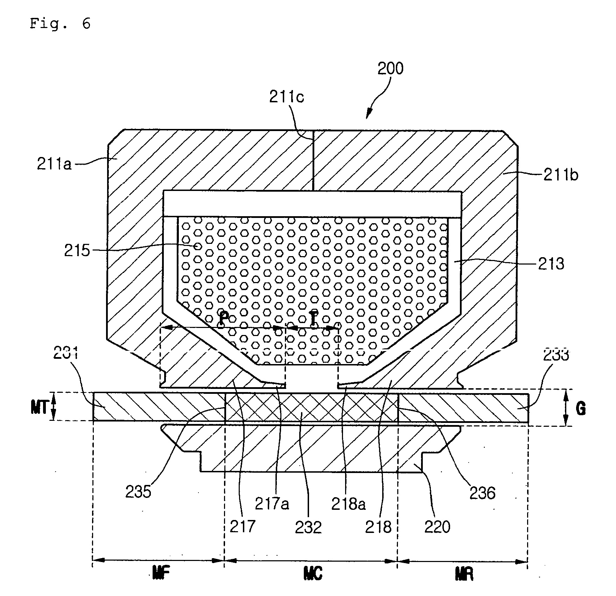

Figs. 5 and 6 are cross-sectional views schematically illustrating the configuration of a linear motor.

Referring to Fig. 5, according to an embodiment, the first stator magnetic pole 217 and the second stator magnetic pole 218 of the second core 211b are disposed apart from each other on the basis of the opening 219.

In detail, a first tip 217a is provided in an end of the first stator magnetic pole 217, and a second tip 218a is provided in the second stator magnetic pole 218. It can be understood that the opening 219 is formed by separating the first tip 217a and the second tip 218a. The axial direction length of the opening 219 is defined as "T", which may be understood as a distance between the first and second tips 217a and 218a.

It is understood that a gap between the outer stator 210 and the inner stator 220 may be an air gap.

Specifically, the air gap is a portion where the magnetic flux generated in the outer stator 210 and the magnetic flux of the permanent magnet 230 meet, and thus a thrust for the permanent magnet 230 may be formed by interaction of the magnetic fluxes. The height of the air gap is defined as "G".

Since the permanent magnet 230 should reciprocate in the air gap, the thickness MT of the permanent magnet 230 may be formed smaller than the height G of the air gap.

As described in Fig. 5, when a current is applied to the coil 215 so as to form the magnetic flux in a clockwise direction, a portion of the magnetic flux passes through the first stator magnetic pole 217 via the second stator magnetic pole 218, the permanent magnet 230 and the inner stator 220. Here, the portion of the magnetic flux may be named "air gap magnetic flux", and the air gap magnetic flux is helpful to generate a thrust for the permanent magnet 230.

The other portion of the magnetic flux may be formed to pass through the first stator magnetic pole 217 from the second stator magnetic pole 218. The other portion of the magnetic flux is not helpful for a thrust acting on the permanent magnet 230, and may thus be named "leakage magnetic flux (dotted arrow).

A relationship between the height G of the air gap and the axial direction length T of the opening 219 is provided.

As described above, the magnetic flux may include the air gap magnetic flux and the leakage magnetic flux. When one of the air gap magnetic flux and the leakage magnetic flux becomes larger, the other magnetic flux may become smaller relatively.

A ratio between the air gap magnetic flux and the leakage magnetic flux may vary with a ratio between the height G of the air gap and the axial direction length T of the opening 219.

In detail, since the gap between the outer stator 210 and the inner stator 220 becomes greater as the height G of the air gap becomes greater, the magnitude of the magnetic flux flowing into the inner stator 220 from the outer stator 210 is reduced. That is, the magnitude of the air gap magnetic flux is reduced.

Since the gap between the outer stator 210 and the inner stator 220 becomes smaller as the axial direction length T of the opening 219 becomes smaller, the magnitude of the magnetic flux flowing from one of the inner and outer stators 219 and 210 into the other one stator is increased. That is, the magnitude of the air gap magnetic flux is increased.

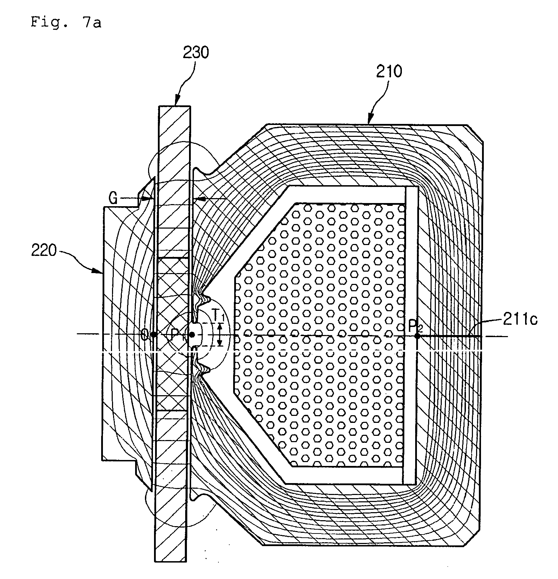

Therefore, to reduce the leakage magnetic flux and increase the air gap magnetic flux relatively, the axial direction length T of the opening 219 may be equal to or greater than the height G of the air gap. That is, T≥G may be established. Related effects may be confirmed in Figs. 7A to 7C.

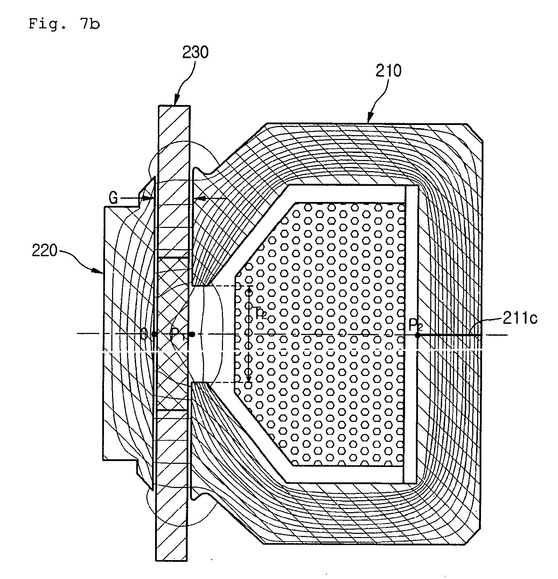

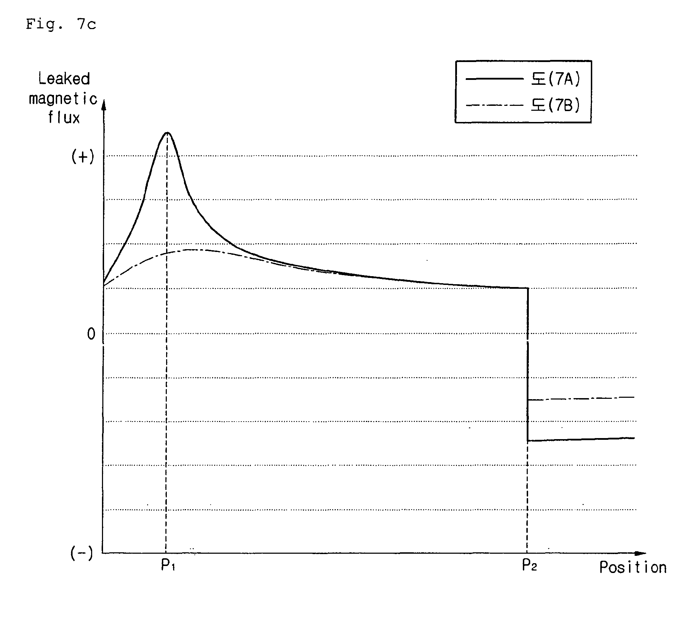

Fig. 7A illustrates a magnetic flux in a linear motor having a magnetic pole tip distance of T1, Fig. 7B illustrates a magnetic flux in a linear motor having a magnetic pole tip distance of T2, and Fig. 7C illustrates the magnitude of a leakage magnetic flux in the linear motor in Figs. 7A and 7B.

Fig. 7A illustrates a flow of the magnetic flux generated in the motor assembly 200 when the axial direction length of the opening 219 is T1, and Fig. 7B illustrates a flow of the magnetic flux generated in the motor assembly 200 when the axial direction length of the opening 219 is T2.

T2 is greater than T1, and, for example, T1 may be 3mm and T2 may be 9mm.

The air gaps in Figs. 7A and 7B have the same height G.

In Figs. 7A and 7B, when one point where a first line in a radial direction, which penetrates through the center of the opening 219, meets the inner stator 220 is defined as a zero point (O), a point intersecting with a second line connecting the first and second stator magnetic poles 217 and 218 may be defined as P1 (first point). A distance between the zero point (O) and the P1 may correspond to the height of the air gap.

Also, when a point on the bobbin 213 at which the first line intersects with the coupling part 211c is defined in as a point P2 (a second point), Fig. 7C illustrates a magnetic flux that leaks from the motor assembly 200.

In detail, as illustrated in Fig. 7A, in the height G of the air gap, if the opening 219 has a relatively small axial length, a leakage magnetic flux of the magnetic flux generated in the outer stator 210, for example, a leakage magnetic flux of a positive (+) pole may significantly increase from the zero point (O) to the point P1 to form a maximum leakage magnetic flux at the point P1. Here, the leakage magnetic flux may gradually decrease from the point P1 to the point P2.

Also, the leakage magnetic flux of the positive (+) pole may be switched in direction to a negative (-) pole to significantly increase. As away from the point P2, the magnitude of the leakage magnetic flux may have an approximately constant value (a constant magnetic flux). Here, the terms "positive (+) pole and negative (-) pole" denote to leakage magnetic flux directions opposite to each other. Also, the constant magnetic flux may be understood as the maximum magnetic flux of the negative (-) pole.

On the other hand, as illustrated in Fig. 7B, in the height G of the air gap, if the opening 219 has a relatively large axial length, a leakage magnetic flux of the magnetic flux generated in the outer stator 210, for example, a leakage magnetic flux of a positive (+) pole may smoothly increase from the zero point (O) to the point P1 to form a maximum leakage magnetic flux at the point P1. The maximum magnetic flux in Fig. 7B may have a value relatively less than that in Fig. 7A.

Here, the leakage magnetic flux may gradually decrease from the point P1 to the point P2.

The leakage magnetic flux of the positive (+) pole may be switched in direction to the negative (-) pole to significantly increase. As away from the point P2, the magnitude of the leakage magnetic flux may have an approximately constant value (a constant magnetic flux). However, the constant magnetic flux in Fig. 7B may have a value relatively greater than that in Fig. 7A.

As illustrated in Fig. 7C, with respect to the height G of the predetermined air gap, the more the opening increases in length T, the more the maximum leakage magnetic flux, i.e., the maximum magnetic fluxes of the positive (+) and negative (-) poles decrease. Thus, more amount of thrust may be provided to the permanent magnet 230 to improve the operation efficiency of the motor assembly 200.

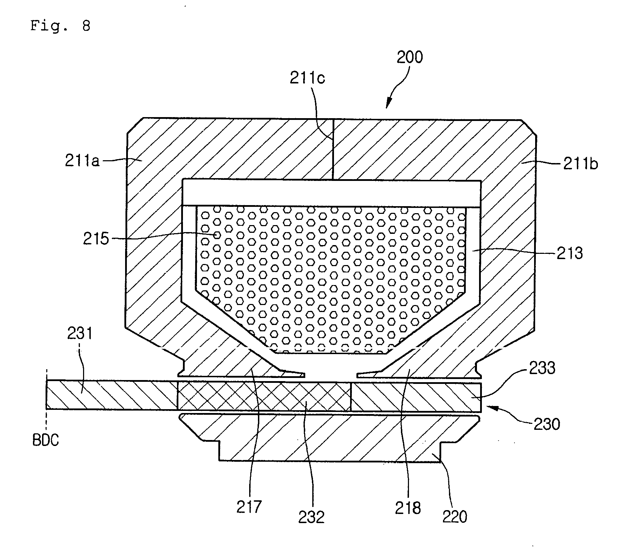

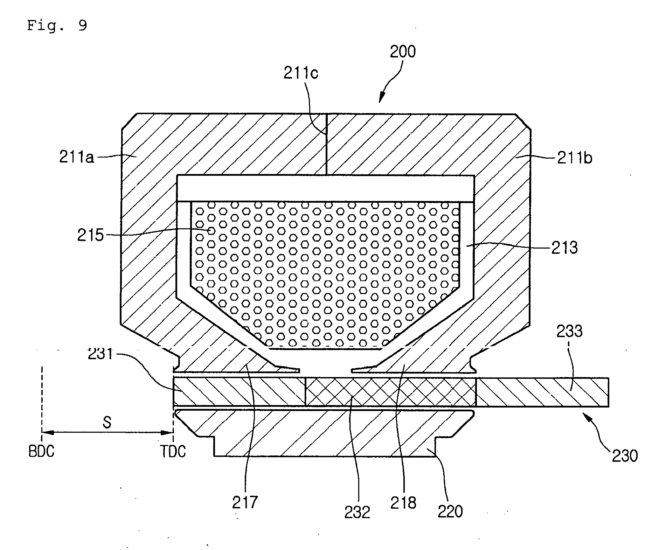

Fig. 8 is a cross-sectional view of a linear motor illustrating a position of a permanent magnet when a piston is positioned at the TDC, according to an embodiment, and Fig. 9 is a cross-sectional view of a linear motor illustrating a position of a permanent magnet when a piston is positioned at the BDC, according to an embodiment.

Referring to Figs. 5, 6, 8, and 9, the permanent magnet according to an embodiment includes a plurality of poles 231, 232, and 233 which are alternately arranged in polarity. The plurality of poles 231, 232, and 233 include a first pole 231, a second pole 232 coupled to the first pole 231, and a third pole 233 coupled to the second pole 232.

The second pole 232 may be called a "central magnetic pole", and the first and third poles 231 and 233 may be called "both end magnetic poles" in that the second pole 232 is disposed between the first and third poles 231 and 233.

The central magnetic pole may have a length greater than that of each of both end magnetic poles. A length of the central magnetic pole 232 may be defined as a length "MC", a length of the first pole 231 may be defined as a length "MF", and a length of the third pole 233 may be defined as a length "MR". The lengths MF and MR may have the same value. On the other hand, the lengths MF and MR may have values different from each other so as to increase the thrust according to a design of the compressor.

A first interface surface 235 may be disposed between the first pole 231 and the second pole 232, and a second interface surface 236 may be disposed between the second pole 232 and the third pole 233.

The first interface surface 235 may be reciprocated within a range that is not out of the first stator magnetic pole 217 with respect to a center of the first stator magnetic pole 217, and the second interface surface 236 may be reciprocated within a range that is not out of the second stator magnetic pole 218 with respect to a center of the second stator magnetic pole 218.

That is, the first interface surface 235 may be reciprocated in an axial direction between both ends of the first stator magnetic pole 217 with respect to the center of the first stator magnetic pole 217. Also, the second interface surface 236 may be reciprocated in the axial direction between both ends of the second stator magnetic pole 218 with respect to the center of the second stator magnetic pole 218.

Here, a force (thrust) pulled and pushed between polarities (an N pole or an S pole) of the first stator magnetic pole 217 and polarities of the first and second poles 231 and 232 may occur. Also, since the force pulled and pushed between polarities (an N pole or an S pole) of the second stator magnetic pole 217 and polarities of the second and third poles 231 and 232 occurs, the permanent magnet may be reciprocated.

The first and second poles 231 and 233 have the same polarity. The second pole 232 disposed between the first and third poles 231 and 233 may have a polarity opposite to that of each of the first and second poles 231 and 233. For example, if each of the first and third poles 231 and 233 is the N pole, the second pole 232 may be the S pole. If each of the first and third poles 231 and 233 is the S pole, the second pole 232 may be the N pole.

Ideally, a structure in which two poles acting on each other with respect to the first stator magnetic pole 217 are disposed, and other two poles acting on each other with respect to the second stator magnetic pole 218 are disposed may be provided to generate a more amount of thrust on the permanent magnet 230. Here, the two poles acting on each other may have the same length, and also the other two poles may the same length.

However, when considering the limited inner space of the compressor 10, the permanent magnet having four poles may be limited in arrangement. That is, if the four poles are arranged, the permanent magnet may increase in length, and thus, the linear motor may increase in length.

Thus, the permanent magnet 230 according to an embodiment may have two poles that are positioned at the central portion to serve as one pole and three poles that are alternately arranged.

Thus, the pole disposed at the central portion, i.e., the central magnetic pole may have a length greater than that of each of both end magnetic poles. Thus, when compared to the case in which the four poles are arranged, a compact structure may be realized. In addition, both end magnetic poles may be reduced by a half or less in length. That is, the following relational expression may be defined.
MF or MR ≤ MC ≤ 2 * MF or 2* MR

Also, the central magnetic pole may have a length MC less than the sum of the length MF of the first pole 231 and the length MR of the second pole 232.

In summary, the more the length of the central magnetic pole increases, the more the mutual acting force with the first stator magnetic pole 217 or the second stator magnetic pole 218 increases. Thus, the thrust may increase.

However, when considering the whole size of the linear motor, i.e., considering the miniaturization or compactification, if the forgoing relational expression is satisfied, the two effects, i.e., the increase of the thrust and the compactification of the compressor may be achieved.

The length P of the first stator magnetic pole 217 or the second stator magnetic pole 218 in the axial direction may be determined on the basis of stroke S of the operating piston 130 when the maximum load is applied to the compressor 10. The stroke S of the piston 130 may be understood as a distance between the TDC and the BDC.

When the piston 130 is positioned at the BDC, an end (a left end in Fig. 8) of the first pole 231 may be disposed outside the first core 211a. Here, the end of the first pole 231 may be defined as an end facing the first interface surface 235 defining one end of the first pole 231, i.e., the other end of the first pole 231.

Also, the outside of the first core 211a may be understood as an area defined as the outside of the virtual line in the radius direction, which passes through an outer end of the first core 211s. Also, in the terms in this specification, the "outside" or outward direction" may represent a direction that is away from the center of the opening 219, and the "inside or inward direction" may represent a direction that is closer to the center of the opening 219.

Also, when the piston 130 is positioned at the TDC, the end of the first pole 231 may be disposed inside the first core 211a. That is, the end of the first pole 231 may be disposed within a region, in which the first core 211a exists, with respect to the axial direction.

However, the end of the first pole 231 may not move up to the inside of the first stator magnetic pole 217. That is, the end of the first pole 231 may be disposed at a position corresponding to an end of the first stator magnetic pole 217 or disposed outside the first stator magnetic pole 217. Here, the inside of the first stator magnetic pole 217 may be understood as a space between virtual lines in the radial direction, which pass through both ends of the first stator magnetic pole 217.

The first stator magnetic pole 217 may have the same axial length as the second stator magnetic pole 218.

In detail, the axial length P of the first or second stator magnetic pole 217 or 218 may be determined by adding a control error or mechanical error to the stroke S of the piston 130. For example, if the stroke S is about 16 mm, the length P may be set to about 18 mm.

If the length P is less than the stroke S, the first or second interface surface 235 or 236 may move outward from the first or second stator magnetic pole 217 or 218. Thus, the force pushed and pulled between the magnetic poles 217 and 218 and the permanent magnet 230 may be reduced. Thus, the length P may be determined to a value greater than the stroke S.

A relational expression between the length P and the length of the first or second pole 231 or 233 is defined.

When each of the first and second interface surfaces 235 and 236 is reciprocated with respect to the center of each of the first and second stator magnetic poles 217 and 218, if both ends of both end magnetic poles 231 and 233 moves into both ends of the first and second stator magnetic poles 217 and 218, the thrust applied to the permanent magnet may be reduced.

That is, if at least one portion of both end magnetic poles 231 and 233 is not disposed outside both ends of the first and seconde stator magnetic poles 217 and 218, the continues mutual acting force between the magnetic fluxes of the outer stator 210 and the permanent magnet 230 may be weakened.

Thus, when considering the thrust for generating the reciprocating motion of the permanent magnet 230, the length MF of the first pole 231 and the length MR of the third pole 233 may be greater than the length P of each of the first and second stator magnetic poles 217 and 218.

However, the length MF of the first pole 231 and the length MR of the third pole 233 may be factors that have an influence on the whole length of the permanent magnet 230. Thus, the lengths MF and MR may be used as a limitation factor for realizing the miniaturization of the linear compressor 10.

Thus, the current embodiment may propose the following relational expression.
MF or MR ≥ 0.9 * P

According to the above-described relational expression, if the length MF of the first pole 231 and the length MR of the third pole 233 are within a range similar to the length P of each of the first and second stator magnetic poles 217 and 218, the thrust may be reduced, and the linear compressor 10 may be compact.

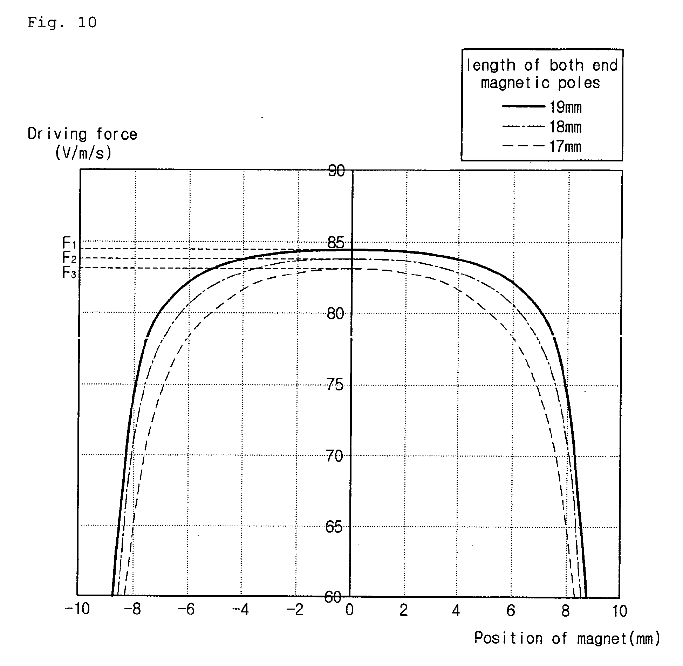

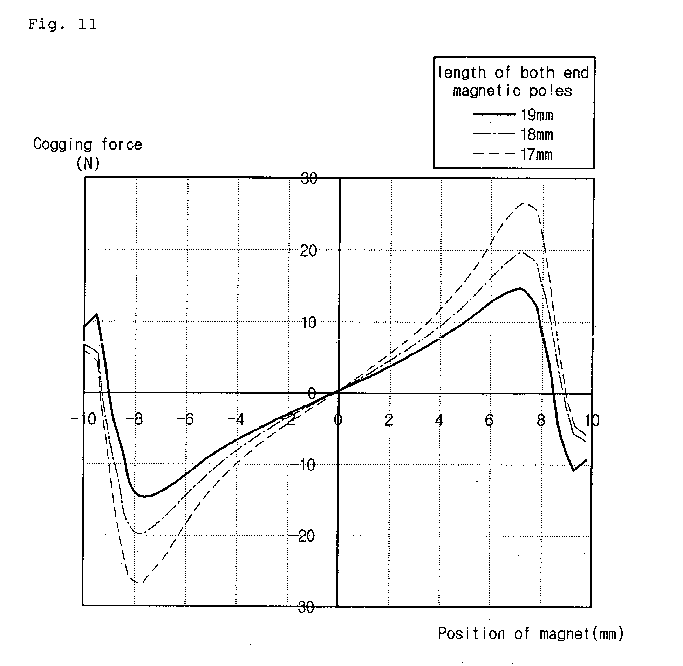

Fig. 10 is a graph showing the magnitude of a thrust generated according to the lengths of magnetic poles at both ends, in the permanent magnet according to an embodiment, and Fig. 11 is a graph showing the magnitude of a cogging force according to the lengths of magnetic poles at both ends, in a permanent magnet according to an embodiment.

Referring to Fig. 10, a change in thrust to the same input current according to the length of each of both end magnetic poles 231 and 233 according to an embodiment is illustrated.

A horizontal axis in Fig. 10 illustrates a position of the permanent magnet 230. A zero point (O) of the horizontal axis may be defined as a state in which each of the first and second interface surfaces 235 and 236 is disposed at the center of each of the first and second stator magnetic poles 217 and 218. This state may be understood as a state in which the permanent magnet is disposed at the zero point.

Also, a negative (-) position may be defined as a case in which the permanent magnet 230 moves from the zero point in one direction, and a positive (+) position may be defined as a case in which the permanent magnet 230 moves from the zero point in the other direction. In a horizontal axis, the more a critical value in position increases, the more a distance from the zero point may be gradually further away.

Referring to Fig. 10, when the permanent magnet 230 is disposed at the zero point, the thrust may be maximally generated. Also, the more each of both end magnetic poles 231 and 233 increases in length, the more the maximum thrust may increase.

For example, under the same condition in which the central magnetic pole 232 has a length of about 24 mm, if each of both end magnetic poles 231 and 233 has a length of about 19 mm, the maximum thrust may be F1 N. Also, if each of both end magnetic poles 231 and 233 has a length of about 17 mm, the maximum thrust may be F2 N. Here, the maximum thrusts may be defined as follow: F1 > F2 > F3

Also, the more each of both end magnetic poles 231 and 233 increases in length, the magnitude of the thrust may significantly increase on the whole. That is, since the more cach of both end magnetic poles 231 and 233 increase in length, the magnitude of the thrust applied to the permanent magnet 230 increases, the operation efficiency of the compressor may be improved.

Fig. 11 illustrates a change in peak value of a force due to magnetic reluctance of the permanent magnet 230, i.e., a cogging force according to the length of each of both end magnetic poles 231 and 233 according to an embodiment.

The magnetic reluctance or cogging force of the permanent magnet 230 may be understood as electrical resistance with respect to an mutual acting force between the magnetic flux generated in the outer stator 210 and the magnetic flux of the permanent magnet 230.

The cogging force may increase to a peak value according to the position (position (+) or negative (-) position) of the permanent magnet or vary in a direction in which the peak value decreases.

In detail, when the permanent magnet 230 is disposed at the positive (+) position, the cogging force may be formed in a positive (+) direction and has a peak value at a predetermined position. On the other hand, when the permanent magnet 230 is disposed at the negative (-) position, the cogging force may be formed in a negative (-) direction and has a peak value at a predetermined position. Here, the positive (+) and negative (-) directions of the cogging force may denote forces acting in directions opposite to each other.

The more the peak value increases, the more the force applied to the springs 151 and 155 may increase. Thus, it may be difficult to control the linear motor 200.

Referring to Fig. 11, the more each of both end magnetic poles 231 and 233 increases in length, the more the positive (+) and negative (-) peak value of the cogging force may decrease. Thus, the linear motor 200 may be easily controlled.

For example, under the same condition in which the central magnetic pole 232 has a length of about 24 mm, if each of both end magnetic poles 231 and 233 has a length of about 19 mm, a peak value of the cogging force may be 15 N. Also, if each of both end magnetic poles 231 and 233 has a length of about 18 mm, a peak value of the cogging force may be 20 N. Also, if each of both end magnetic poles 231 and 233 has a length of about 17 mm, a peak value of the cogging force may be 27 N.

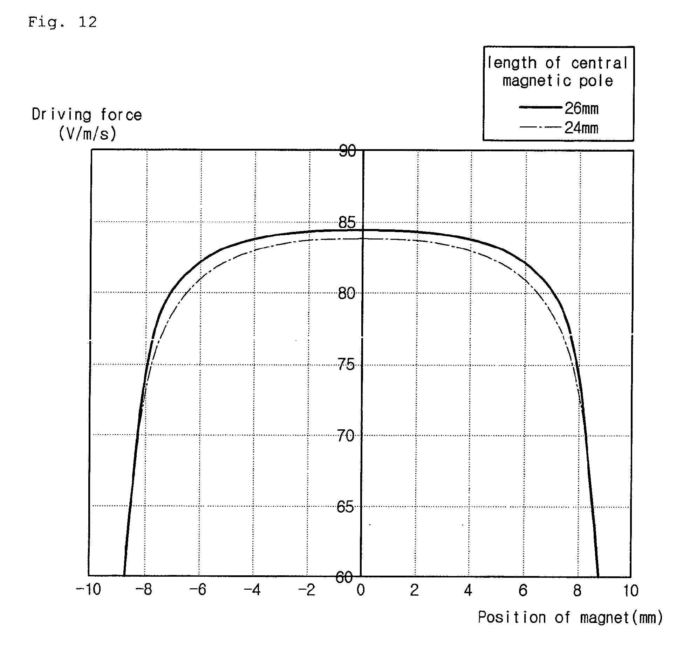

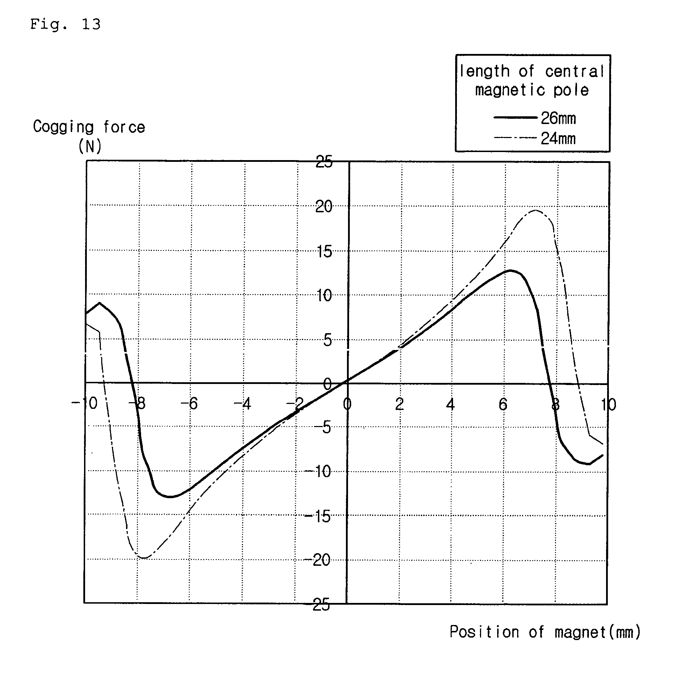

Fig. 12 is a graph showing the magnitude of the thrust generated according to the length of the central magnetic pole, in the permanent magnet according to an embodiment, and Fig. 13 is a graph showing variations in a cogging force according to the length of a central magnetic pole, in the permanent magnet according to an embodiment.

Referring to Figs. 12 and 13, the more each of both end magnetic poles increase in length, the more the thrust may increase, and the peak value of the cogging force may decrease.

As described with reference to Figs. 10 and 11, as the thrust increases, the operation efficiency of the linear motor may be improved. Also, as the peak value of the cogging force decreases, the control reliability of the linear motor may be improved.

Referring to Fig. 10, it is seen that the thrust increases as the central magnetic pole increases in length MC under the condition in which both end magnetic poles have the same length. For example, under the condition in which the lengths MF and MR are about 18 mm, it is seen that the thrust (the maximum thrust: 85 v/m/s) when the length MC is about 26 mm may be greater than that (the maximum thrust: 83 V/m/s) when the length MC is about 24 mm.

Referring to Fig. 11, it is seen that the peak value of the cogging force decreases as the central magnetic pole increases in length MC under the condition in which both end magnetic poles have the same length. For example, under the condition in which the lengths MF and MR are about 18 mm, it is seen that the peak value (about 13 N) of the cogging force when the length MC is about 26 mm may be less than that (about 20 N) of the cogging force when the length MC is about 24 mm.

According to embodiments, since the permanent magnet is composed of a magnet having three polarities, an amount of a magnetic flux generated can be increased. Also, the increased magnetic flux of the permanent magnet interacts with a magnetic flux generated from the outer stator, thereby increasing a thrust exerted on the piston.

Furthermore, since the length of the opening between the magnetic poles disposed in the outer stator may be maintained equal to or greater than the air gap between the outer stator and the inner stator, it is possible to reduce a leaked magnetic flux and increase the magnitude of the magnetic flux which is generated from the outer stator and oriented toward the inner stator.

Accordingly, the air gap magnetic flux and the magnetic flux of the permanent magnet interact with each other, thereby generating higher thrust.

Moreover, in the permanent magnet having three poles, the length of the both-end magnetic pole is a predetermined proportion of the length of magnetic pole of the outer stator, thus making it possible to increase a generated thrust in comparison with a current applied to the linear motor and also reduce a cogging force (or torque).

Additionally, in the permanent magnet having three poles, the length of the central magnetic pole is greater than the lengths of the both-end magnetic poles, and is twice or less than the lengths of the both-end magnetic poles. This also enables a generated thrust to be increased and a cogging force (or torque) to be reduced.

Also, the piston and the cylinder are made of a nonmagnetic material such as aluminum or aluminum alloy, and thus the magnetic flux can be prevented from being leaked to the outside through the piston or cylinder.

In addition, the permanent magnet is made of an inexpensive ferrite material, thereby reducing a manufacturing cost for the motor assembly.

Although embodiments have been described with reference to a number of illustrative embodiments thereof, it should be understood that numerous other modifications and embodiments can be devised by those skilled in the art that will fall within the scope of the present invention as defined by the appended claims. In addition to variations and modifications in the component parts and/or arrangements, alternative uses will also be apparent to those skilled in the art.

## Claims

1. A linear compressor, comprising:
a cylinder (120) having a compression space for a refrigerant defined therein;
a piston (130) configured for reciprocatably moving in an axial direction inside the cylinder; and
a linear motor (200) for supplying a power to the piston,
wherein the linear motor (200) comprises:
an outer stator (210) comprising a first stator magnetic pole (217), a second stator magnetic pole (218) and an opening (219) defined between the first stator magnetic pole and the second stator magnetic pole;
an inner stator (220) disposed apart from the outer stator; and
a permanent magnet (230), **characterised in that** the permanent magnet has three poles (231, 232, 233), movably disposed in an air gap between the outer stator and the inner stator,
wherein the three poles include
two both-end magnetic poles (231, 233); and
a central magnetic pole (232) disposed between the two both-end magnetic poles, the central magnetic pole having a length greater than any one of the two both-end magnetic poles.

2. The linear compressor according to claim 1, wherein the length of the central magnetic pole (232) is twice or less than that of the any one of the two both-end magnetic poles (231, 233).

3. The linear compressor according to claim 1 or 2, wherein the length of the central magnetic pole (232) is equal to or less than the sum of lengths of the two both-end magnetic poles (231, 233).

4. The linear compressor according to any of claims 1 to 3, wherein an axial direction length of the opening (219) is equal to or greater than a radial direction height of the air gap.

5. The linear compressor according to any of preceding claims, wherein the piston (130) is moveable by a stroke between a top dead center (TDC) and a bottom dead center (BDC), and
a length of the first stator magnetic pole (217) or second stator magnetic pole (218) is greater than the stroke.

6. The linear compressor according to claim 5, wherein a length of the any one of the two both-end magnetic poles (231, 233) is 90% or more of the length of the first stator magnetic pole (217) or second stator magnetic pole (218).

7. The linear compressor according to any of preceding claims, wherein the two both-end magnetic poles (231, 233) comprise:
a first pole (231) coupled to the central magnetic pole (232) at a first interface (235); and
a second pole (233) coupled to the central magnetic pole (232) at a second interface (236).

8. The linear compressor according to claim 7, wherein the first interface (235) is arranged to reciprocate in an axial direction within both ends of the first stator magnetic pole (217), with the center of reciprocation at the center of the first stator magnetic pole (217), and
the second interface (236) is arranged to reciprocate in an axial direction within both ends of the second stator magnetic pole (218), with the center of reciprocation at the center of the second stator magnetic pole (218).

9. The linear compressor according to claim 7 or 8, wherein the first pole (231) comprises an end axially opposite to the first interface (235), and
the end of the first pole (231) is arranged, in an axial direction, to be outwardly positioned than the outer stator (210) when the piston (130) is positioned at its bottom dead center.

10. The linear compressor according to claim 9, wherein the end of the first pole (231) is arranged, in an axial direction, to be positioned corresponding to or outer than the axial terminus of the first stator magnetic pole (217) when the piston (130) is positioned at its top dead center.

11. The linear compressor according to any of claims 1 to 6, wherein the two both-end magnetic poles (231, 233) comprise a first pole (231) coupled to one side of the central magnetic pole (232), and
at least a portion of the first pole (231) is positioned in an air gap between the first stator magnetic pole (217) and the inner stator (220).

12. The linear compressor according to claim 11, wherein the two both-end magnetic poles (231, 233) further comprise a second pole (233) coupled to the other side of the central magnetic pole (232), and
at least a portion of the second pole (233) is positioned in an air gap between the second stator magnetic pole (218) and the inner stator (220).

13. The linear compressor according to any of preceding claims, wherein the opening (219) is defined between a tip (217a) of the first stator magnetic pole (217) and a tip (218a) of the second stator magnetic pole (218), at one side of an accommodation space for accommodating a coil.

14. The linear compressor according to any of preceding claims, wherein the permanent magnet (230) is made of a ferrite material.

15. The linear compressor according to any of preceding claims, wherein the piston (130) and the cylinder (120) are made of aluminum or aluminum alloy.

## Patentansprüche

1. Linearverdichter, der aufweist:
einen Zylinder (120) mit einem darin definierten Verdichtungsraum für ein Kältemittel;
einen Kolben (130), der konfiguriert ist, um sich in dem Zylinder in einer Axialrichtung hin und her zu bewegen; und
einen Linearmotor (200) zum Zuführen einer Leistung an den Kolben, wobei der Linearmotor (200) aufweist:
einen äußeren Stator (210), der einen ersten Statormagnetpol (217), einen zweiten Statormagnetpol (218) und eine zwischen dem ersten Statormagnetpol und dem zweiten Statormagnetpol definierte Öffnung (219) aufweist;
einen inneren Stator (220), der entfernt von dem äußeren Stator angeordnet ist; und
einen Permanentmagneten (230), **dadurch gekennzeichnet, dass** der Permanentmagnet drei Pole (231, 232, 233) hat, die in einem Luftspalt zwischen dem äußeren Stator und dem inneren Stator angeordnet sind,
wobei die drei Pole umfassen
zwei Magnetpole (231, 233) an beiden Enden; und
einen zentralen Magnetpol (232), der zwischen den zwei Magnetpolen an beiden Enden angeordnet ist, wobei der zentrale Magnetpol eine größere Länge als jeder der zwei Magnetpole an beiden Enden hat.

2. Linearverdichter nach Anspruch 1, wobei die Länge des zentralen Magnetpols (232) doppelt oder weniger als die eines der zwei Magnetpole (231, 233) an beiden Enden ist.

3. Linearverdichter nach Anspruch 1 oder 2, wobei die Länge des zentralen Magnetpols (232) kleiner oder gleich der Summe der Längen der zwei Magnetpole (231, 233) an beiden Enden ist.

4. Linearverdichter nach einem der Ansprüche 1 bis 3, wobei eine Länge in der Axialrichtung der Öffnung (219) größer oder gleich einer Höhe in der Radialrichtung des Luftspalts ist.

5. Linearverdichter nach einem der vorhergehenden Ansprüche, wobei der Kolben (130) durch einen Hub zwischen einem oberen Totpunkt (TDC) und einem unteren Totpunkt (BDC) beweglich ist, und
eine Länge des ersten Statormagnetpols (217) oder des zweiten Statormagnetpols (218) größer als der Hub ist.

6. Linearverdichter nach Anspruch 5, wobei eine Länge eines der zwei Magnetpole (231, 233) an beiden Enden 90% oder mehr der Länge des ersten Statormagnetpols (217) oder des zweiten Statormagnetpols (218) ist.

7. Linearverdichter nach einem der vorhergehenden Ansprüche, wobei die zwei Magnetpole (231, 233) an beiden Enden aufweisen:
einen ersten Pol (231), der an einer ersten Schnittstelle (235) mit dem zentralen Magnetpol (232) gekoppelt ist; und
einen zweiten Pol (233), der an einer zweiten Schnittstelle (236) mit dem zentralen Magnetpol (232) gekoppelt ist.

8. Linearverdichter nach Anspruch 7, wobei die erste Schnittstelle (235) derart angeordnet ist, dass sie sich in einer Axialrichtung innerhalb beider Enden des ersten Statormagnetpols (217) hin und her bewegt, wobei die Mitte der Hin- und Herbewegung in der Mitte des ersten Statormagnetpols (217) liegt, und
die zweite Schnittstelle (236) derart angeordnet ist, dass sie sich in einer Axialrichtung innerhalb beider Enden des zweiten Statormagnetpols (218) hin und her bewegt, wobei die Mitte der Hin- und Herbewegung in der Mitte des zweiten Statormagnetpols (218) liegt.

9. Linearverdichter nach Anspruch 7 oder 8, wobei der erste Pol (231) ein Ende aufweist, das axial entgegengesetzt zu der ersten Schnittstelle (235) ist, und
das Ende des ersten Pols (231) in einer Axialrichtung derart angeordnet ist, dass es weiter auswärts als der äußere Stator (210) positioniert ist, wenn der Kolben (130) an seinem unteren Totpunkt positioniert ist.

10. Linearverdichter nach Anspruch 9, wobei das Ende des ersten Pols (231) in einer Axialrichtung derart angeordnet ist, dass es entsprechend dem axialen Endpunkt des ersten Statormagnetpols (217) oder weiter außen positioniert ist, wenn der Kolben (130) an seinem oberen Totpunkt positioniert ist.

11. Linearverdichter nach einem der Ansprüche 1 bis 6,
wobei die zwei Magnetpole (231, 233) an beiden Enden einen ersten Pol (231), der mit einer Seite des zentralen Magnetpols (232) gekoppelt ist, aufweisen, und
wenigstens ein Abschnitt des ersten Pols (231) in einem Luftspalt zwischen dem ersten Statormagnetpol (217) und dem inneren Stator (220) positioniert ist.

12. Linearverdichter nach Anspruch 11, wobei die zwei Magnetpole (231, 233) an beiden Enden ferner einen zweiten Pol (233) aufweisen, der mit der anderen Seite des zentralen Magnetpols (232) gekoppelt ist, und
wenigstens ein Abschnitt des zweiten Pols (233) in einem Luftspalt zwischen dem zweiten Statormagnetpol (218) und dem inneren Stator (220) positioniert ist.

13. Linearverdichter nach einem der vorhergehenden Ansprüche, wobei die Öffnung (219) zwischen einer Spitze (217a) des ersten Statormagnetpols (217) und einer Spitze (218a) des zweiten Statormagnetpols (218) auf einer Seite eines Aufnahmeraums zum Aufnehmen einer Spule definiert ist.

14. Linearverdichter nach einem der vorhergehenden Ansprüche, wobei der Permanentmagnet (230) aus einem Ferritmaterial hergestellt ist.

15. Linearverdichter nach einem der vorhergehenden Ansprüche, wobei der Kolben (130) und der Zylinder (120) aus Aluminium oder Aluminiumlegierung hergestellt sind.

## Revendications

1. Compresseur linéaire comprenant :
un cylindre (120) présentant un espace de compression pour un réfrigérant défini dans celui-ci ;
un piston (130) configuré pour se déplacer selon un mouvement de va-et-vient dans une direction axiale dans le cylindre ; et
un moteur linéaire (200) pour fournir une puissance au piston,
dans lequel le moteur linéaire (200) cornprend :
un stator extérieur (210) comprenant un premier pôle magnétique de stator (217), un second pôle magnétique de stator (218) et une ouverture (219) définie entre le premier pôle magnétique de stator et le second pôle magnétique de stator ;
un stator intérieur (220) agencé loin du stator extérieur ; et
un aimant permanent (230), **caractérisé en ce que** l'aimant permanent présente trois pôles (231, 232, 233) agencés de manière mobile dans une fente d'air entre le stator extérieur et le stator intérieur,
dans lequel les trois pôles comportent
deux pôles magnétiques à deux extrémités (231, 233) ; et
un pôle magnétique central (232) agencé entre les deux pôles magnétiques à deux extrémités, le pôle magnétique central présentant une longueur supérieure à l'un quelconque des deux pôles magnétiques à deux extrémités.

2. Compresseur linéaire selon la revendication 1, dans lequel la longueur du pôle magnétique central (232) est deux fois ou inférieure à celle de l'un quelconque des deux pôles magnétiques à deux extrémités (231, 233).

3. Compresseur linéaire selon la revendication 1 ou 2, dans lequel la longueur du pôle magnétique central (232) est égale ou inférieure à la somme des longueurs des deux pôles magnétiques à deux extrémités (231, 233).

4. Compresseur linéaire selon l'une quelconque des revendications 1 à 3, dans lequel une longueur de direction axiale de l'ouverture (219) est égale à ou supérieure à une hauteur de direction radiale de la fente d'air.

5. Compresseur linéaire selon l'une quelconque des revendications précédentes, dans lequel le piston (130) est mobile d'une course entre un point mort haut (TDC) et un point mort bas (BDC) et
une longueur du premier pôle magnétique de stator (217) ou du second pôle magnétique de stator (218) est supérieure à la course.

6. Compresseur linéaire selon la revendication 5, dans lequel une longueur de l'un quelconque des deux pôles magnétiques à deux extrémités (231, 233) est de 90 % ou plus de la longueur du premier pôle magnétique de stator (217) ou du second pôle magnétique de stator (218).

7. Compresseur linéaire selon l'une quelconque des revendications précédentes, dans lequel les deux pôles magnétiques à deux extrémités (231, 233) comprennent :
un premier pôle (231) couplé au pôle magnétique central (232) à une première interface (235) ; et
un second pôle (233) couplé au pôle magnétique central (232) à une seconde interface (236).

8. Compresseur linéaire selon la revendication 7, dans lequel la première interface (235) est agencée pour se déplacer de manière alternative dans une direction axiale entre les deux extrémités du premier pôle magnétique de stator (217), avec le centre de déplacement alternatif sur le centre du premier pôle magnétique de stator (217) et la seconde interface (236) est agencée pour se déplacer de manière alternative dans une direction axiale entre les deux extrémités du second pôle magnétique de stator (218), avec le centre de déplacement alternatif sur le centre du second pôle magnétique de stator (218).

9. Compresseur linéaire selon la revendication 7 ou 8, dans lequel le premier pôle (231) comprend une extrémité en regard axial de la première interface (235) et l'extrémité du premier pôle (231) est agencée dans une direction axiale pour être positionnée vers l'extérieur par rapport au stator extérieur (210) lorsque le piston (130) est positionné sur son point mort bas.

10. Compresseur linéaire selon la revendication 9, dans lequel l'extrémité du premier pôle (231) est agencée dans une direction axiale pour être positionnée de manière correspondante à ou extérieure par rapport au terminus axial du premier pôle magnétique de stator (217) lorsque le piston (130) est positionné sur son point mort haut.

11. Compresseur linéaire selon l'une quelconque des revendications 1 à 6, dans lequel les deux pôles magnétiques à deux pôles (231, 233) comprennent un premier pôle (231) couplé à un côté du pôle magnétique central (232) et
au moins une partie du premier pôle (231) est positionnée dans une fente d'air entre le premier pôle magnétique de stator (217) et le stator intérieur (220).

12. Compresseur linéaire selon la revendication 11, dans lequel les deux pôles magnétiques à deux extrémités (231, 233) comprennent en outre un second pôle (233) couplé à l'autre côté du pôle magnétique central (232), et
au moins une partie du second pôle (233) est positionnée dans une fente d'air entre le second pôle magnétique de stator (218) et le stator intérieur (220).

13. Compresseur linéaire selon l'une quelconque des revendications précédentes, dans lequel l'ouverture (219) est définie entre un bout (217a) du premier pôle magnétique de stator (217) et un bout (218a) du second pôle magnétique de stator (218), sur un côté d'un espace de logement destiné à loger une bobine.

14. Compresseur linéaire selon l'une quelconque des revendications précédentes, dans lequel l'aimant permanent (230) est réalisé en un matériau de ferrite.

15. Compresseur linéaire selon l'une quelconque des revendications précédentes, dans lequel le piston (130) et le cylindre (120) sont réalisés en aluminium ou en alliage d'aluminium.
